# FASCICULE DE BREVET EUROPEEN

(11) **EP 4 060 426 B1**
(45) Date de publication et mention de la délivrance du brevet: **19.02.2025**
(21) Numéro de dépôt: 21163722.8
(22) Date de dépôt: 19.03.2021
(51) Int. Cl.: G04B 19/12, G04B 45/00

(54) **PROCÉDÉ DE FABRICATION D'UNE PIÈCE D'HABILLAGE D'HORLOGERIE OU DE BIJOUTERIE À BASE CERAMIQUE ET À DECOR STRUCTURÉ**
VERFAHREN ZUR HERSTELLUNG EINES VERKLEIDUNGSTEILS EINER UHR ODER EINES SCHMUCKSTÜCKS AUF KERAMIKBASIS UND MIT EINEM STRUKTURIERTEN DEKOR
METHOD FOR MANUFACTURING A TRIM PART FOR A TIMEPIECE OR JEWELLERY ITEM WITH CERAMIC BASE AND STRUCTURED DECORATION

(43) Date de publication de la demande: 21.09.2022
(73) Titulaire: Omega SA, 2502 Bienne (CH)
(72) Inventeur: JEANRENAUD, Frédéric, 2300 La Chaux-de-Fonds (CH); KISSLING, Gregory, 2520 La Neuveville (CH); SAURET, Pierre, 2208 Les Hauts-Geneveys (CH)
(74) Mandataire: ICB SA

(56) Documents cités:
- EP-A1- 3 591 099
- EP-A1- 3 699 695
- US-B2- 8 685 185

## Description

### Domaine technique de l'invention

L'invention relève du domaine de l'horlogerie ou de la bijouterie, et concerne plus particulièrement un procédé de fabrication d'une pièce d'habillage d'horlogerie ou de bijouterie à base céramique et à décor structuré. L'invention concerne encore un cadran de pièce d'horlogerie fabriquée par la mise en œuvre dudit procédé.

### Arrière-plan technologique

Pour donner un aspect visuel particulier, par exemple un aspect givré, à une pièce d'habillage d'horlogerie ou de bijouterie, il existe plusieurs méthodes bien connues de l'état de la technique.

En effet, il est connu de déposer un verni ou une laque organique dont la composition donne un aspect métallique à la pièce d'habillage.

Il est également connu d'utiliser, comme substrat de la pièce d'habillage, un matériau minéral du type opale ou quartz.

Par ailleurs, on connait également un procédé comprenant une première étape dans laquelle la surface d'une pièce d'habillage est structurée, par frappe ou par laser, avec des motifs ou une structure du type grenée. La pièce d'habillage est réalisée dans un métal, par exemple en aluminium ou en alliage cuivreux.

Ensuite, la surface est polie, puis recouverte d'une couche d'un matériau de couleur blanche, par exemple de l'argent, par voie galvanique ou par méthode de dépôt de couche mince sous vide, par exemple du type dépôt physique par phase vapeur (connu sous l'acronyme en langue anglaise « PVD » pour « Physical Vapor Deposition ») ou dépôt de couche mince atomique (connu sous l'acronyme en langue anglaise « ALD » pour Atomic Layer Deposition).

Toutefois, la mise en œuvre de ces méthodes ne donne pas entière satisfaction, dans la mesure où elles ne permettent pas d'obtenir certaines caractéristiques esthétiques, notamment, un aspect d'éclat métallique, c'est-à-dire un fort pouvoir réflecteur, une intensité de couleur élevée, etc.

EP 3 591 099 A1 (COMADUR SA [CH]) 8 janvier 2020 (2020-01-08) dévoile un procédé de fabrication d'un composant horloger en céramique dont un traitement de surface permet une meilleure adhérence entre le substrat 2 et une couche électriquement conductrice 5-7 déposée sur le substrat. Des évidements 3 sur le substrat sont réalisés par gravage laser dans le substrat, qui sont ensuite remplis d'un matériau métallique 8.

### Résumé de l'invention

L'invention résout les inconvénients précités en proposant une solution permettant de réaliser une pièce d'habillage dont l'aspect visuel présente une brillance et un éclat important, et notamment un aspect esthétique de givre particulièrement intense et prononcé.

A cet effet, la présente invention concerne un procédé de fabrication d'une pièce d'habillage d'horlogerie ou de bijouterie selon la revendication indépendante 1.

Avantageusement, les motifs apparaissent visuellement, d'une part, grâce à la structuration mécanique de surface réalisée à l'étape d'usinage laser, et d'autre part, grâce à la différence d'état de surface entre lesdits motifs, d'aspect mate, et le reste de la surface d'affichage, d'aspect brillant.

La structuration mécanique de la surface d'affichage permet ainsi, en modifiant la diffraction lumineuse, de générer des effets optiques renforçant l'aspect de givre de ladite surface.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, l'embase est réalisée dans un substrat en oxyde de zirconium.

Dans des modes particuliers de mise en œuvre, l'embase est réalisée en verre, en pierre, en alumine ou en saphir.

Dans des modes particuliers de mise en œuvre, l'embase est réalisée de sorte à présenter une épaisseur comprise entre 0.1 mm et 1.2 mm, préférentiellement 0.4 mm.

Selon l'invention telle que revendiquée, lors de l'étape préliminaire, les motifs prédéfinis sont obtenus par traitement d'une image numérique, de sorte à obtenir une image formée de pixels noirs et de pixels blancs, lesdits pixels noirs ou pixels blancs représentant les motifs à usiner.

Dans des modes particuliers de mise en œuvre, lors de l'étape préliminaire, l'image obtenue est formée de pixels noirs, de pixels blancs, et de pixels en nuances de gris, lesdits pixels noirs, blancs ou en nuances de gris représentant les motifs à usiner.

Dans des modes particuliers de mise en œuvre, la nuance du gris des pixels est représentative de la profondeur d'usinage. Autrement dit, la nuance du gris de chaque pixel en nuance de gris est représentative de la profondeur d'usinage de la zone du motif correspondant à chacun desdits pixels.

Dans des modes particuliers de mise en œuvre, le contenu graphique de l'image numérique comporte une forme dendritique, de sorte que les motifs usinés sur l'embase donnent un aspect dendritique à l'embase.

Dans des modes particuliers de mise en œuvre, la surface des motifs représente entre 25% et 75% de la surface d'affichage.

Dans des modes particuliers de mise en œuvre, les motifs présentent une profondeur comprise entre 200 nm et 50µm, préférentiellement entre 5 µm et 10 µm.

Dans des modes particuliers de mise en œuvre, lors de l'étape d'oxydation de l'embase, le traitement thermique est réalisé à une température comprise entre 500 et 1000 degrés Celsius.

Dans des modes particuliers de mise en œuvre, une étape de dépôt d'une couche mince sur une face de l'embase opposée à la face d'affichage, dite « face inférieure », est réalisée après l'étape d'oxydation.

Dans des modes particuliers de mise en œuvre, l'étape de dépôt d'une couche mince sur la face inférieure consiste en l'application d'un verni.

Dans des modes particuliers de mise en œuvre, une étape de dépôt d'une couche mince transparente ou semi-transparente sur la face d'affichage est réalisée après l'étape d'oxydation.

Selon un autre aspect, la présente invention concerne également un cadran de pièce d'horlogerie selon la revendication indépendante 14, tel qu'une montre, obtenu par la mise en œuvre d'un procédé de fabrication tel que décrit précédemment.

### Brève description des figures

D'autres caractéristiques et avantages de l'invention apparaîtront à la lecture de la description détaillée suivante donnée à titre d'exemple nullement limitatif, en référence aux dessins annexés dans lesquels :

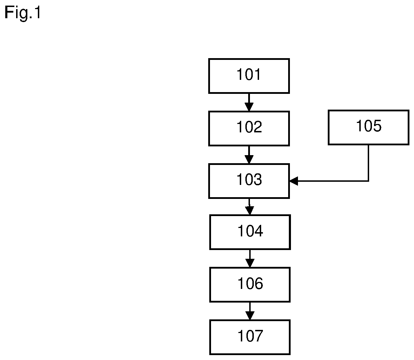

- la figure 1 illustre un logigramme représentant les étapes d'un procédé de fabrication d'une pièce d'habillage d'horlogerie ou de bijouterie selon l'invention.

### Description détaillée de l'invention

La présente invention concerne un procédé de fabrication d'une pièce d'habillage d'horlogerie ou de bijouterie dont les étapes sont représentées schématiquement par le logigramme de la figure 1.

Le procédé selon l'invention comprend les étapes successives de :
- réalisation 101 d'une embase dans un substrat en matériau céramique,
- polissage miroir 102 de l'embase sur au moins une face dite « face d'affichage » destinée à être visible par un utilisateur,
- usinage 103 par usinage laser de motifs prédéfinis lors d'une étape préliminaire 105, sur la face d'affichage,
- oxydation 104 de l'embase par traitement thermique.

Les étapes du procédé de fabrication sont décrites en détail ci-après.

L'embase est préférentiellement réalisée dans un substrat en oxyde de zirconium. Ce matériau présente avantageusement les caractéristiques optiques et mécaniques adéquates pour constituer l'embase, en plus d'être relativement facile à travailler.

Alternativement, le substrat peut être en n'importe quel matériau céramique, tel qu'en verre, en pierre, en alumine, en saphir, etc.

Préférentiellement, le substrat présente une couleur unique, par exemple une couleur blanche.

L'embase est réalisée de sorte à présenter une épaisseur comprise entre 0.1 mm et 1.2 mm, préférentiellement 0.4 mm.

L'étape de polissage miroir 102 de la face d'affichage de l'embase permet à ladite face d'affichage d'obtenir un aspect brillant, possédant un fort pouvoir réflecteur.

L'étape d'usinage 103 est réalisée préférentiellement par gravure laser nanoseconde, picoseconde ou femtoseconde. L'étape d'usinage désigne de façon générale toute opération d'enlèvement de matière, tel que le gravage ou le marquage.

Lors de l'étape d'usinage 103, la gravure laser est réalisée par une machine d'usinage laser pilotée de sorte à usiner des motifs à la surface de la face d'affichage.

Ces motifs sont définis suite au traitement d'une image numérique prédéterminée lors de l'étape préliminaire 105. Plus précisément, le traitement de l'image numérique prédéterminée consiste à obtenir, grâce à un algorithme de traitement d'image, une image numérique transformée comprenant un ensemble de pixels noirs et de pixels blancs représentatifs notamment de la luminosité et du contraste de l'image numérique prédéterminée.

Plus spécifiquement, les pixels noirs correspondent aux pixels les plus sombres de l'image numérique prédéterminée, c'est-à-dire ceux dont la luminosité est inférieure à un seuil prédéfini, et les pixels blancs correspondent aux pixels les plus clairs de l'image numérique prédéterminée, c'est-à-dire ceux dont la luminosité est supérieure au seuil prédéfini.

Les pixels noirs ou les pixels blancs représentent les motifs à usiner.

Il est ainsi possible d'usiner, sur l'embase, des motifs représentatifs du contenu graphique, c'est-à-dire de l'aspect visuel, d'une ou de plusieurs images numériques prédéterminées.

Dans un autre exemple de mise en œuvre de la présente invention, lors de l'étape préliminaire 105, l'image obtenue est formée, en plus de pixels noirs et de pixels blancs, de pixels en nuances de gris. De façon analogue aux pixels blancs et noirs, la nuance du gris de chaque pixel en nuance de gris correspond à la luminosité du pixel correspondant.

La nuance de gris de chaque pixel en nuance de gris est représentative de la profondeur d'usinage de la zone du motif correspondant à chacun desdits pixels.

Préférentiellement, dans le procédé selon l'invention, le contenu graphique de l'image numérique comporte une forme dendritique, de sorte que les motifs usinés sur l'embase donnent un aspect dendritique à la face d'affichage.

Les motifs peuvent être agencés aléatoirement sur la surface de la face d'affichage ou dans des zones prédéfinies.

Avantageusement, la surface des motifs représente entre 25% et 75% de la surface d'affichage, préférentiellement entre 40% et 60%. De la sorte, l'aspect dendritique de la face d'affichage est renforcé.

Lors de l'étape d'usinage 103, les motifs sont usinés de sorte à présenter une profondeur comprise entre 200 nm et 50 µm, de présence entre 5 µm et 10 µm.

De cette profondeur dépend l'intensité de la visibilité des motifs. Autrement dit, plus les motifs sont usinés profondément, plus ils sont visibles.

L'usinage laser produit une sublimation locale de la matière du substrat, au niveau du motif usiné, et par voie de conséquence un échauffement produisant un changement de teinte.

L'étape d'oxydation 104 de l'embase par traitement thermique permet avantageusement à l'embase de retrouver sa couleur initiale.

Préférentiellement, lors de cette étape d'oxydation 104 de l'embase, le traitement thermique est réalisé à une température comprise entre 500 et 1000 degrés Celsius.

Grâce aux étapes du procédé de fabrication selon la présente invention, la pièce d'habillage obtenue présente avantageusement une brillance et un éclat important.

En outre, les motifs usinés étant d'aspect mate et le reste de la surface d'affichage étant d'aspect brillant, la face d'affichage génère un effet d'optique qui, en combinaison avec l'aspect dendritique des motifs, participe à renforcer l'aspect de givre.

Préférentiellement, une étape de dépôt 106 d'une couche mince sur une face de l'embase opposée à la face d'affichage, dite « face inférieure », peut être réalisée après l'étape d'oxydation 104.

Cette étape a pour effet d'opacifier le substrat et éventuellement d'augmenter les caractéristiques mécaniques de la pièce d'habillage, par exemple dans le cas où l'épaisseur de l'embase est particulièrement faible.

Plus particulièrement, l'étape de dépôt 106 d'une couche mince sur la face inférieure consiste en l'application d'un verni.

Par ailleurs, une étape de dépôt 107 d'une couche mince sur la face d'affichage peut être réalisée après l'étape d'oxydation 104, ladite couche mince étant transparente ou semi-transparente.

Cette couche mince a alors comme effet de protéger l'embase de toute agression chimique ou mécanique et éventuellement de modifier sa teinte.

Cette étape de dépôt 107 peut consister en l'application d'une couche mince par dépôt physique par phase vapeur (connu sous l'acronyme en langue anglaise « PVD » pour « physical vapor deposition »).

Alternativement, cette étape de dépôt 107 peut consister en l'application d'un verni ou d'une laque, par exemple structuré.

Il y a lieu de noter que les étapes de dépôt 106 et 107 sont indépendantes l'une de l'autre dans le sens où l'une peut être réalisée sans que l'autre le soit, et où l'ordre de réalisation de ces étapes est indifférent, bien que le logigramme de la figure 1 illustre la réalisation de l'étape de dépôt 106 avant la réalisation de l'étape de dépôt 107.

Dans une application préférentielle, la pièce d'habillage d'horlogerie ou de bijouterie fabriquée par la mise en œuvre du procédé selon l'invention est un cadran de pièce d'horlogerie, tel qu'une montre.

Plus généralement, la pièce d'habillage fabriquée par le procédé selon l'invention peut être constituée par toute tout article décoratif dans les domaines de l'horlogerie ou de la bijouterie destiné à être visible pour un utilisateur.

## Revendications

1. Procédé de fabrication d'une pièce d'habillage d'horlogerie ou de bijouterie comprenant les étapes successives suivantes :
- réalisation 101 d'une embase dans un substrat en matériau céramique,
- polissage miroir 102 de l'embase sur au moins une face dite « face d'affichage » destinée à être visible par un utilisateur,
- usinage 103 par usinage laser de motifs prédéfinis lors d'une étape préliminaire 105, sur la face d'affichage,
- oxydation 104 de l'embase par traitement thermique ;
ledit procédé étant **caractérisé en ce que** lors de l'étape préliminaire 105, les motifs prédéfinis sont obtenus par traitement d'une image numérique, de sorte à obtenir une image formée de pixels noirs et de pixels blancs, lesdits pixels noirs ou pixels blancs représentant les motifs à usiner.

2. Procédé de fabrication selon la revendication 1, dans lequel l'embase est réalisée dans un substrat en oxyde de zirconium.

3. Procédé de fabrication selon la revendication 1, dans lequel l'embase est réalisée en verre, en pierre, en alumine ou en saphir.

4. Procédé de fabrication selon la revendication 1 à 3, dans lequel l'embase est réalisée de sorte à présenter une épaisseur comprise entre 0.1 mm et 1.2 mm.

5. Procédé de fabrication selon l'une des revendications 1 à 4, dans lequel, lors de l'étape préliminaire 105, l'image obtenue est formée de pixels noirs, de pixels blancs, et de pixels en nuances de gris, lesdits pixels noirs, blancs ou en nuances de gris représentant les motifs à usiner.

6. Procédé de fabrication selon la revendication 5, dans lequel la nuance du gris des pixels est représentative de la profondeur d'usinage.

7. Procédé de fabrication selon la revendication 1 à 6, dans lequel le contenu graphique de l'image numérique comporte une forme dendritique, de sorte que les motifs usinés sur l'embase donnent un aspect dendritique à l'embase.

8. Procédé de fabrication selon l'une des revendications 1 à 7, dans lequel la surface des motifs représente entre 25% et 75% de la surface d'affichage.

9. Procédé de fabrication selon l'une des revendications 1 à 8, dans lequel les motifs présentent une profondeur comprise entre 200 nm et 50 µm.

10. Procédé de fabrication selon l'une des revendications 1 à 9, dans lequel lors de l'étape d'oxydation 104 de l'embase, le traitement thermique est réalisé à une température comprise entre 500 et 1000 degrés Celsius.

11. Procédé de fabrication selon l'une des revendications 1 à 10, dans lequel une étape de dépôt 106 d'une couche mince sur une face de l'embase opposée à la face d'affichage, dite « face inférieure », est réalisée après l'étape d'oxydation 104.

12. Procédé de fabrication selon la revendication 11, dans lequel l'étape de dépôt 106 d'une couche mince sur la face inférieure consiste en l'application d'un verni.

13. Procédé de fabrication selon l'une des revendications 1 à 12, dans lequel une étape de dépôt 107 d'une couche mince transparente ou semi-transparente sur la face d'affichage est réalisée après l'étape d'oxydation 104.

14. Cadran de pièce d'horlogerie obtenu par la mise en œuvre d'un procédé selon l'une des revendications 1 à 13.

## Patentansprüche

1. Verfahren zur Herstellung eines Ausstattungsstücks für Uhrmacherei oder Bijouterie, die folgenden aufeinanderfolgenden Schritte umfassend:
- Fertigung 101 eines Sockels in einem Substrat aus Keramikwerkstoff,
- Hochglanzpolieren 102 des Sockels auf mindestens einer "Anzeigeseite" genannten Seite, die dazu bestimmt ist, für einen Benutzer sichtbar zu sein,
- Bearbeitung 103 durch Laserbearbeitung von bei einem einem vorbereitenden Schritt 105 vordefinierten Motiven auf der Anzeigeseite,
- Oxidation 104 des Sockels durch Wärmebehandlung;
wobei das Verfahren **dadurch gekennzeichnet ist, dass** die beim vorbereitenden Schritt 105 vordefinierten Muster durch Behandlung eines digitalen Bildes erhalten werden, um ein aus schwarzen Pixeln und weißen Pixeln gebildetes Bild zu erhalten, wobei die schwarzen Pixel oder weißen Pixel die zu bearbeitenden Motive darstellen.

2. Verfahren zur Herstellung nach Anspruch 1, wobei der Sockel aus einem Substrat aus Zirconiumoxid gefertigt wird.

3. Verfahren zur Herstellung nach Anspruch 1, wobei der Sockel aus Glas, aus Stein, aus Aluminiumoxid oder aus Saphir gefertigt wird.

4. Verfahren zur Herstellung nach Anspruch 1 bis 3, wobei der Sockel gefertigt wird, um eine Dicke aufzuweisen, die zwischen 0,1 mm und 1,2 mm liegt.

5. Verfahren zur Herstellung nach einem der Ansprüche 1 bis 4, wobei bei vorbereitenden Schritt 105 das erhaltene Bild aus schwarzen Pixeln, weißen Pixeln und Graustufenpixeln gebildet wird, wobei die schwarzen, weißen oder Graustufenpixel die zu bearbeitenden Motive darstellen.

6. Verfahren zur Herstellung nach Anspruch 5, wobei die Graustufe der Pixel repräsentativ für die Bearbeitungstiefe ist.

7. Verfahren zur Herstellung nach Anspruch 1 bis 6, wobei der grafische Inhalt des digitalen Bildes eine dendritische Form beinhaltet, sodass die auf dem Sockel bearbeiteten Motive dem Sockel ein dendritisches Aussehen verleihen.

8. Verfahren zur Herstellung nach einem der Ansprüche 1 bis 7, wobei die Oberfläche der Motive zwischen 25% und 75% der Anzeigeoberfläche darstellt.

9. Verfahren zur Herstellung nach einem der Ansprüche 1 bis 8, wobei die Motive eine Tiefe aufweisen, die wischen 200 nm und 50 µm liegt.

10. Verfahren zur Herstellung nach einem der Ansprüche 1 bis 9, wobei bei dem Oxidationsschritt 104 des Sockels die Wärmebehandlung bei einer Temperatur durchgeführt wird, die zwischen 500 und 1000 Grad Celsius liegt.

11. Verfahren zur Herstellung nach einem der Ansprüche 1 bis 10, wobei nach dem Oxidationsschritt 104 ein Schritt 106 zum Abscheiden einer dünnen Schicht auf einer der Anzeigeseite gegenüberliegenden Seite des Sockels, "Unterseite" genannt, durchgeführt wird.

12. Verfahren zur Herstellung nach Anspruch 11, bei dem der Schritt 106 zum Abscheiden einer dünnen Schicht auf die Unterseite aus dem Auftragen eines Lackes besteht.

13. Verfahren zur Herstellung nach einem der Ansprüche 1 bis 12, wobei nach dem Oxidationsschritt 104 ein Schritt zum Abscheiden 107 einer transparenten oder halbtransparenten dünnen Schicht auf der Anzeigeseite durchgeführt wird.

14. Zifferblatt eines Uhrmachereistücks, das durch die Umsetzung eines Verfahrens nach einem der Ansprüche 1 bis 13 erhalten wird.

## Claims

1. Method for manufacturing an external horological or jewellery part comprising the following successive steps of:
- producing 101 a base plate in a substrate made of a ceramic material,
- mirror polishing 102 the base plate on at least one face, referred to as the "display face", intended to be visible to a user,
- laser machining 103 predefined patterns in a preliminary step 105 on the display face,
- oxidising 104 the base plate by heat treatment;
said method being **characterised in that** in the preliminary step 105, the predefined patterns are obtained by digital image processing, so as to obtain an image formed of black pixels and white pixels, said black pixels or white pixels representing the patterns to be machined.

2. Manufacturing method according to claim 1, wherein the base plate is made of a zirconium oxide substrate.

3. Manufacturing method according to claim 1, wherein the base plate is made of glass, stone, alumina or sapphire.

4. Manufacturing method according to claim 1 to 3, wherein the base plate is produced such that it has a thickness comprised between 0.1 mm and 1.2 mm.

5. Manufacturing method according to one of claims 1 to 4, wherein, in the preliminary step 105, the image obtained is formed of black pixels, white pixels, and greyscale pixels, said black, white or greyscale pixels representing the patterns to be machined.

6. Manufacturing method according to claim 5, wherein the shade of grey of the pixels is representative of the depth of machining.

7. Manufacturing method according to claim 1 to 6, wherein the graphic content of the digital image includes a dendritic shape, such that the patterns machined on the base plate give the base plate a dendritic appearance.

8. Manufacturing method according to one of claims 1 to 7, wherein the surface area of the patterns represents between 25% and 75% of the display area.

9. Manufacturing method according to one of claims 1 to 8, wherein the patterns have a depth comprised between 200 nm and 50 µm.

10. Manufacturing method according to one of claims 1 to 9, wherein during the step 104 of oxidising the base plate, the heat treatment is carried out at a temperature comprised between 500 and 1,000 degrees Celsius.

11. Manufacturing method according to one of claims 1 to 10, wherein a step 106 of depositing a thin layer on a face of the base plate opposite the display face, referred to as the "bottom face", is carried out after the oxidation step 104.

12. Manufacturing method according to claim 11, wherein the step 106 of depositing a thin layer on the bottom face consists of applying a varnish.

13. Manufacturing method according to one of claims 1 to 12, wherein a step 107 of depositing a transparent or semi-transparent thin layer on the display face is carried out after the oxidation step 104.

14. Timepiece dial obtained by implementing a method according to one of claims 1 to 13.
